# EUROPÄISCHE PATENTSCHRIFT

(11) **EP 3 818 602 B1**
(45) Veröffentlichungstag und Bekanntmachung des Hinweises auf die Patenterteilung: **28.01.2026**
(21) Anmeldenummer: 19737091.9
(22) Anmeldetag: 05.07.2019
(51) Int. Cl.: H02G 15/184, H02G 15/107

(54) **VERBINDUNGSMUFFE MIT ELASTOMEREM VERBINDUNGSKÖRPER FÜR HOCHSPANNUNGSGLEICHSTROMKABELN**
COUPLING SLEEVE
MANCHON DE RACCORDEMENT

(30) Priorität: 06.07.2018 DE 102018116416
(43) Veröffentlichungstag der Anmeldung: 12.05.2021
(73) Patentinhaber: NKT GmbH & Co. KG, 51061 Köln (DE)
(72) Erfinder: BEHLE, Mathias, 51061 Köln (DE); AMERPOHL, Uwe, 51061 Köln (DE)
(74) Vertreter: Zimmermann & Partner Patentanwälte mbB
(86) Internationale Anmeldenummer: PCT/EP2019/068160
(87) Internationale Veröffentlichungsnummer: WO 2020/008058

(56) Entgegenhaltungen:
- EP-A1- 2 375 423
- EP-A1- 3 034 561
- EP-A1- 3 148 027
- CH-B1- 710 800
- DE-A1- 19 804 159
- US-A1- 2016 164 238

## Beschreibung

Die vorliegende Erfindung betrifft eine Verbindungsmuffe zur Verbindung von Kabelenden von Hochspannungsgleichspannungskabeln mit einem Verbindungskörper, der Steuereinlagen zur Steuerung des elektrischen Feldes aufweist. Die Erfindung betrifft ferner ein Kabelsystem, insbesondere für Hochspannungsgleichspannungsanwendungen, ein Verfahren zur Herstellung einer Verbindungsmuffe sowie ein Verfahren zum Verbinden von zwei Kabelenden von zwei Gleichspannungskabeln.

Verbindungsmuffen im Bereich der elektrischen Energietechnik sind bereits seit vielen Jahren aus dem Stand der Technik bekannt. Derartige Verbindungsmuffen dienen dabei insbesondere der elektrischen und mechanischen Verbindung zweier Kabelenden. Hierbei stellen die Verbindungsmuffen auch Isolations- und Schutzelemente dar. Die Verbindungsmuffen können fest mit den Kabeln verbunden werden und die elektrische Trennstelle umschließen. Zur Verbindung der Kabelenden werden bei bekannten Verbindungsmuffen die Adern der Kabel entsprechend vorbereitet, in die Verbindungsmuffe eingeschoben und dann gegebenenfalls dort fixiert.

Um das elektrische Feld innerhalb der Verbindungsmuffe entsprechend steuern zu können, sind beispielsweise Verbindungsmuffen bekannt, bei welchen eine Hochspannungselektrode im Inneren der Verbindungsmuffe angeordnet ist. Diese beispielsweise als Feld- oder Schirmelektroden bezeichneten Hochspannungselektroden haben sich zwar, insbesondere bei Wechselspannungsanwendungen, in der Vergangenheit durchaus bewährt. Bei Gleichspannungsmuffen müssen jedoch die besonderen Anforderungen der Gleichstromtechnik berücksichtigt werden. So stellen beispielsweise transiente Vorgänge, etwa bei Einschaltvorgängen oder bei Spannungsimpulsen, Herausforderungen dar. Die elektrischen Eigenschaften von Kabelmuffen der Wechselspannungstechnik haben sich zum Teil für Hochspannungsgleichspannungsanwendungen als nicht ausreichend erwiesen. Zudem können mit bekannten Muffen nur bedingt Kabel mit unterschiedlichem Durchmesser verbunden werden.

Das Patent CH 710800 B1 offenbart eine Muffe für die Verbindung von Hochspannungspolymerkabeln für Gleichstrom. Der Muffenkörper weist einen elektrisch leitfähigen Deflektor sowie eine aus mindestens zwei isolierenden Elastomeren bestehende Isolierung auf. Die Patentanmeldung EP 2375423 A1 offenbart eine Durchführung, umfassend einen hohlen, länglichen Isolator, durch den ein Leiter hindurchführt. Die Durchführung umfasst außerdem einen Kondensatorkern, der mehrere Folien beinhaltet, welche durch einen dielektrischen Isolator voneinander getrennt sind. Die Patentanmeldung DE 19804159 A1 offenbart eine aus einem elastomeren Material vorgefertigte dreiteilige Verbindungsmuffe zum Aufschieben, insbesondere für Hochspannungskabel. Die Patentanmeldung US 2016/164238 A1 offenbart ein Verfahren zur additiven Fertigung von Muffen für elektrische Kabel mittels einer Vorrichtung für die additive Fertigung, umfassend zumindest einen Druckkopf. Die Patentanmeldung EP 3034561 A1 offenbart eine Kabelverbindung, umfassend (von innen nach außen) eine innere leitende Schicht, eine Feldsteuerungsschicht, eine isolierende Schicht und eine äußere leitende Schicht. Die Feldsteuerungsschicht dient dazu, das elektrische Feld der nicht isolierten, verbundenen Kabelenden zu steuern. Die EP 3 148 027 A1 zeigt eine weitere Kabelverbindung mit Feldsteuerungsschichten.

Vor diesem Hintergrund stellt sich die **Aufgabe**, eine Verbindungsmuffe, insbesondere für Hochspannungsgleichspannungsanwendungen, anzugeben, welche verbesserte mechanische und elektrische Eigenschaften aufweist.

Bei einer Verbindungsmuffe der eingangs genannten Art wird die Aufgabe dadurch **gelöst**, dass der Verbindungskörper aus einem Elastomer, insbesondere aus einem Silikonelastomer, hergestellt ist. Die Steuereinlagen sind geschichtet und gegeneinander isoliert angeordnet. Die Steuereinlagen sind elektrisch leitend und weisen insbesondere Metall und/oder insbesondere leitfähigen Kunststoff auf. Die Steuereinlagen sind derart ausgestaltet, dass bei transienten Vorgängen eine kapazitive Feldsteuerung erzeugbar ist, wobei bei transienten Vorgängen die Kapazitäten zwischen den einzelnen Steuereinlagen wirksam sind, sodass sich eine Feldverteilung gemäß einem kapazitiven Spannungsteiler ergibt. Die Länge der einzelnen Steuereinlagen nimmt nach radial außen zu. Auf diese Weise kann eine Verbindungsmuffe angegeben werden, mit welcher die mechanischen und elektrischen Eigenschaften, aber auch die Montage vereinfacht werden kann. Zum einen kann durch einen Verbindungskörper, welcher Steuereinlagen zur Steuerung des elektrischen Feldes aufweist, die Potentialverteilung in dem Verbindungskörper vorgegeben werden. Insbesondere kann mit Hilfe der Steuereinlagen das elektrische Feld über den gesamten Verlauf in radialer Richtung des Verbindungskörpers und an den Grenzflächen zum Kabel eingestellt werden. Aufgrund der Steuereinlagen kann so auf aufwendige Hochspannungselektroden verzichtet werden. Zum anderen kann durch das Vorsehen eines Verbindungskörpers aus einem Elastomer, insbesondere aus einem Silikonelastomer, eine flexible Verbindungsmuffe realisiert werden, welche elastisch verformbar ausgebildet ist. Hierdurch kann sich insbesondere ein einfacher und fehlerunanfälliger Aufbau und insbesondere eine einfache Montage ergeben.

Die einzelnen Schichten der Steuereinlagen können bevorzugt in radialer Richtung übereinanderliegend angeordnet sein, so dass sich im Querschnitt eine ringförmige Anordnung der einzelnen Steuereinlagen ergeben kann. Die Steuereinlagen können ferner aus verschiedenen Materialien bestehen. Besonders bevorzugt ist, wenn die einzelnen Steuereinlagen durch Schichten aus einem isolierenden Material, insbesondere in radialer Richtung, voneinander getrennt sind. Durch die Kombination von Steuereinlagen und isolierende Schichten kann dann eine gezielte Feldsteuerung erreicht werden.

Die leitenden Schichten sind durch isolierende Schichten voneinander getrennt. Durch die Wahl des jeweiligen Materials können die elektrischen Eigenschaften der einzelnen Steuereinlagen je nach Bedarf eingestellt werden.

Gemäß einer bevorzugten Ausgestaltung ist vorgesehen, dass die Steuereinlagen mittels eines Druckverfahrens abwechselnd mit dem Elastomer einbringbar sind. Als besonders vorteilhaft hat es sich dabei erwiesen, wenn die einzelnen Schichten aus Steuereinlagen und Elastomer mittels eines 3D-Druckverfahrens in die Verbindungsmuffe eingebracht werden. Auf diese Weise können die Steuereinlagen von innen nach außen in definierten Abständen vorgesehen werden. Bevorzugt können dabei während des Druckverfahrens unterschiedliche Materialien für die Steuereinlagen und die Elastomerschichten verwendet werden. Als besonders geeinigte Materialien für das Elastomer haben sich Silikone, Silikonkautschuke oder dergleichen erwiesen.

Ferner ist es vorteilhaft, wenn die Steuereinlagen eine Wanddicke von weniger als 500 pm, insbesondere von weniger als 200 pm, aufweisen. Auf diese Weise kann eine große Anzahl an Schichten von Steuereinlagen in den Verbindungskörper eingebracht werden.

Eine weitere Ausgestaltung sieht vor, dass mindestens fünf Steuereinlagen, besonders bevorzugt mindestens acht Steuereinlagen, besonders bevorzugt mindestens zehn Steuereinlagen vorgesehen sind. Durch eine hohe Anzahl an Steuereinlagen kann das elektrische Feld noch besser beeinflusst werden. Auf diese Weise können die elektrischen Eigenschaften des Verbindungskörpers und der Verbindungsmuffe weiter verbessert werden.

Besonders bevorzugt ist, wenn mindestens eine Steuereinlage, insbesondere in radialer Richtung innen liegende Steuereinlage, auf Hochspannungspotential liegt und/oder mindestens eine Steuereinlage, insbesondere in radialer Richtung außen liegende Steuereinlage, geerdet ist. Das elektrische Feld kann so auf den Bereich zwischen der äußersten und der innersten Steuereinlage begrenzt und die Potentialverteilung des elektrischen Feldes gesteuert werden.

In Weiterbildung der Erfindung wird vorgeschlagen, dass die Steuereinlagen derart ausgestaltet sind, dass bei stationären Vorgängen bei Gleichspannungsanwendung eine resistive Feldsteuerung erzeugbar ist. Im stationären Gleichspannungsfall können die Widerstände und/oder die Leitfähigkeiten zwischen den einzelnen Steuereinlagen wirksam sein, so dass in diesem Fall die Steuereinlagen wie ein resistiver Spannungsteiler wirken können. Die einzelnen leitfähigen Steuereinlagen können dabei jeweils ein Potential gemäß der relevanten Spannungsteiler annehmen.

Als besonders vorteilhaft hat es sich erwiesen, wenn die Steuereinlagen radial um die Kabelenden herum angeordnet sind. Auf diese Weise kann eine gleichmäßige Feldverteilung über die gesamte Verbindungsmuffe erzielt werden. Die Steuereinlagen können sich bevorzugt von innen nach außen als einzelne radial angeordnete Schichten erstrecken.

Die Länge der einzelnen Steuereinlagen nimmt nach radial außen zu. Die Steuereinlagen können so eine Art Ring bilden, welcher eine im Wesentlichen kegelförmig ausgestaltete Querschnittsfläche aufweisen kann. Die Steuereinlagen können sich von einem Ende des Verbindungskörpers zum anderen Ende des Verbindungskörpers erstrecken. Besonders bevorzugt können die Steuereinlagen von innen nach außen in Richtung der Grenzflächen, und insbesondere in Richtung von in den Verbindungskörper integrierten Elektroden verlängert werden. Auf diese Weise können konische ausgebildete Endbereiche der Steuereinlagen realisiert werden. Die Steuereinlagen enden jedoch im Inneren des Verbindungskörpers. Derart kann die Potentialverteilung über die Enden der Steuereinlagen, insbesondere über die Grenzflächen, auf die Kabelenden übertragen und in diese eingeprägt werden. Ferner kann auf diese Weise das elektrische Feld über den kompletten Bereich des Verbindungskörpers entsprechend den Anforderungen an die Verbindungsmuffe geführt werden.

Vorzugsweise ist mittels der Steuereinlagen, insbesondere über den Abstand der Steuereinlagen zueinander, das elektrische Feld an den Grenzflächen des Verbindungskörpers einstellbar. Die einzelnen leitfähigen Steuereinlagen können jeweils ein Potential gemäß der relevanten Spannungsteiler annehmen. Durch die Wahl des Abstandes zwischen den einzelnen Steuereinlagen können diese Spannungsteiler angepasst und so das elektrische Feld an den Grenzschichten zwischen den Kabelenden und dem Verbindungskörper eingestellt werden. So kann die Feldverteilung vorgegeben und eingestellt werden.

In diesem Zusammenhang ist es besonders bevorzugt, wenn der Abstand zwischen den Steuereinlagen im Bereich von 0,5 mm bis 3 mm liegt, insbesondere im Bereich von 1 mm bis 2 mm liegt. Besonders bevorzugt kann der Abstand ferner im Bereich von 1,3 mm bis 1,8 mm liegen. Diese Bereiche haben sich als besonders vorteilhaft erwiesen, um eine elektrische Feldverteilung mit möglichst wenigen Verlusten zu erzeugen. Auf diese Weise kann das elektrische Feld geeignet durch den Verbindungskörper geführt werden.

Eine vorteilhafte Ausgestaltung sieht vor, dass der Verbindungskörper einteilig ausgebildet ist. Besonders bevorzugt weist der Verbindungskörper in diesem Fall einen Muffenhauptkörper auf. An den Außenseiten können in den Verbindungskörper und insbesondere in den Muffenhauptkörper bevorzugt leitfähige Elektroden integriert sein. Die Elektroden können bevorzugt als Feldsteuertrichter ausgebildet sein und als umfangsseitig integrierte Elektrodenringe ausgebildet sein. Auf diese Weise kann die Potentialverteilung zusätzlich eingestellt und gesteuert werden. Die Feldsteuerelemente können dabei insbesondere bei transienten Vorgängen dominieren.

Alternativ kann der Verbindungskörper mehrteilig, insbesondere dreiteilig, mit einem Muffenhauptkörper und mindestens einem Adapterelement ausgebildet sein. In diesem Fall hat es sich als vorteilhaft erwiesen, wenn das Adapterelement aus einem Silikonelastomer mit integrierten Feldsteuerelementen ausgebildet ist. Besonders bevorzugt ist, wenn das Adapterelement einen Isolierköper und/oder eine Feldsteuerelektrode als Feldsteuerelement umfasst. Die Elektroden können bevorzugt als Feldsteuerelement, insbesondere als Feldsteuertrichter, ausgebildet sein und als umfangsseitig integrierte Elektrodenringe ausgebildet sein. Mittels des Feldsteuerelements kann die Potentialverteilung an den Grenzflächen zu dem Verbindungskörper zusätzlich eingestellt werden. Das Feldsteuerelement kann bevorzugt komplementär zum Muffenhauptkörper des Verbindungskörpers und/oder zum abisolierten Kabel ausgebildet sein. Der Isolierkörper kann bevorzugt aus einem elastomeren Material, wie Silikon, EPDM oder EPR ausgebildet sein. Auf diese Weise kann die Feldverteilung über den gesamten Bereich zuverlässig eingestellt werden.

Das Adapterelement kann bevorzugt zwischen dem Kabel und dem Muffenhauptkörper angeordnet werden und sich insbesondere der Form des Muffenhauptkörpers und/oder des Kabels anpassen. Besonders bevorzugt ist, wenn der Muffenhauptkörper und das Adapterelement aus dem gleichen Material hergestellt sind. Allerdings sind auch Ausgestaltungen denkbar, bei welchen der Muffenhauptkörper und das Adapterelement aus unterschiedlichen Materialien hergestellt sind.

Bevorzugt ist, wenn der Verbindungskörper in einem Gehäuse angeordnet ist. Auf diese Weise kann der Verbindungskörper vor Umgebungseinflüssen, wie Staub, Feuchtigkeit oder dergleichen geschützt werden, wodurch Beschädigungen und/oder Alterungsprozesse reduziert werden können. Das Gehäuse kann insbesondere aus Metall, Kunststoff oder dergleichen gefertigt sein. Das Gehäuse kann in Form eines Zylinderrohres ausgebildet sein. Auf diese Weise kann der Verbindungskörper und damit auch die Verbindungsstelle der Kabelenden mit einem mechanischen Schutz umhüllt werden, welcher die isolierenden Eigenschaften des Kabelmantels erfüllt.

Besonders bevorzugt weist der Verbindungskörper eine stromtragfähige Verbindung zur elektrischen Verbindung, insbesondere eine feldelektrodenfreie Verbindung, zur elektrischen Verbindung der Leiter der Kabelenden auf. Die stromtragfähige Verbindung kann insbesondere bereichsweise als metallisches Rohr ausgebildet sein, über welches der Strom geführt werden kann. Aufgrund der in dem Verbindungskörper angeordneten Steuereinlagen zur Steuerung des elektrischen Feldes kann in Abhängigkeit von der Dimensionierung der Steuereinlagen, auf aufwändige Schirm- oder Feldelektroden im Bereich der Verbindung der beiden Kabelenden verzichtet werden. Es sind jedoch auch Ausgestaltungen denkbar, bei welchen zusätzlich zu den Steuereinlagen Schirm- oder Feldelektroden vorgesehen sein können.

Gemäß einer konstruktiven Ausgestaltung wird vorgeschlagen, dass die Verbindungsmuffe als Aufschiebemuffe ausgebildet ist. Die Verbindungsmuffe kann insoweit bereits vollständig vorgefertigt sein, wodurch sich der Fertigungsaufwand am Einbauort deutlich verringern lässt. Die Verbindungsmuffe kann auf diese Weise am Einbauort auf eines der Kabelenden aufgeschoben, die Kabelenden beispielsweise mittels Press-, Schraub- oder Schweißverbindungen miteinander verbunden und dann die Verbindungsmuffe über die Verbindungsstelle geschoben werden. Aufwändige Herstellungsprozesse wie diese beim Herstellen einer Gießharzmuffe entstehen, können so verringert werden.

Bei einem Kabelsystem der eingangs genannten Art wird die Aufgabe durch zwei Kabel und eine Verbindungsmuffe **gelöst**. Dabei hat es sich als vorteilhaft herausgestellt, wenn die Verbindungsmuffe zumindest eines der zuvor beschriebenen Merkmale allein oder in Kombination aufweist. Es ergeben sich die gleichen Vorteile, welche zuvor im Zusammenhang mit der Verbindungsmuffe beschrieben wurden.

Eine vorteilhafte Ausgestaltung des Kabelsystems sieht dabei vor, dass die Kabel unterschiedliche Durchmesser aufweisen. Durch das Vorsehen der Steuereinlagen in dem Verbindungskörper der Verbindungsmuffe sowie durch die Ausgestaltung der Verbindungsmuffe aus einem elastomeren Material können bevorzugt auch Kabel mit unterschiedlichen Durchmesser verbunden werden, da die Unterschiede durch das elastomere Material der Verbindungsmuffe ausgeglichen werden können.

Ferner vorteilhaft ist, wenn Kabel die unterschiedliche elektrische Eigenschaften aufweisen. Auf diese Weise können über die Verbindungsmuffe auch Kabel mit unterschiedlichen elektrischen Eigenschaften miteinander verbunden werden, da die Unterschiede über die Materialien und/oder Steuereinlagen ausgeglichen werden können. In elektrischer Hinsicht können auch Kabel miteinander verbunden werden, die unterschiedliche Materialparameter und damit unterschiedliche elektrische Eigenschaften aufweisen, da die Einprägung der Potentialverteilung, insbesondere bei Gleichspannungsanwendungen, stark dominierend ist. Durch die Einprägung der Potentialverteilung über die leitfähigen Steuereinlagen innerhalb eines Verbindungskörpers ist es daher möglich, die unterschiedlichen Materialparameter der Kabelisolierung zu verdrängen.

Des Weiteren wird zur **Lösung** der eingangs genannten Aufgabe ein Verfahren zur Herstellung einer Verbindungsmuffe vorgeschlagen, wobei das Elastomer des Verbindungskörpers und die Steuereinlagen abwechselnd mittels eines 3D-Druckers aufgetragen und so eine dreidimensionale Verbindungsmuffe erzeugt wird. Dabei hat es sich als besonders vorteilhaft erwiesen, wenn die Verbindungsmuffe mindestens eines der zuvor beschriebenen Merkmale aufweist. Auch hier ergeben sich die gleichen Vorteile, welche bereits im Zusammenhang mit der Verbindungsmuffe und/oder dem Kabelsystem beschrieben wurden, wobei einzelne Merkmale allein oder in Kombination Verwendung finden können.

Mit Hilfe eines solchen Herstellungsverfahrens können auf einfache Art und Weise Verbindungsmuffen hergestellt werden, welche zum einen eine hohe Flexibilität und zum anderen eine gute Potentialverteilung aufweisen. Mit Hilfe eines 3D-Druckverfahrens kann das Material Schicht für Schicht aufgetragen und so dreidimensionale Gegenstände, insbesondere eine Verbindungsmuffe, erzeugt werden. Dabei kann der schichtweise Aufbau bevorzugt computergesteuert aus einem oder mehreren flüssigen oder festen Werkstoffen nach vorgegebenen Maßen und Formen erfolgen. Vorteilhafterweise können beim Aufbau physikalische oder chemische Härtungs- oder Schmelzprozesse stattfinden.

Als besonders vorteilhaft hat es sich erwiesen, wenn mindestens zwei verschiedene Materialien verwendet werden. Bevorzugt kann zur Herstellung ein 3D-Drucker verwendet werden, welcher eine Vielzahl unterschiedlicher Materialien während eines Druckprozesses verwenden kann. Insbesondere haben sich Multi-Material 3D-Druckverfahren als vorteilhaft erwiesen. Auf diese Weise können unterschiedliche Materialien, mit unterschiedlichen elektrischen und/oder mechanischen Eigenschaften eingesetzt werden. Derart lassen sich die Steuereinlagen definiert in die Verbindungsmuffe, insbesondere in einem vorgegebenen Abstand einbringen.

Ferner wird zur **Lösung** der eingangs genannten Aufgabe ein Verfahren zum Verbinden von zwei Kabelenden von zwei Gleichspannungskabeln vorgeschlagen, bei welchem die Kabelenden, insbesondere die Kabelisolierungen, abgemantelt und die Kabelenden miteinander verbunden werden und die Verbindungsmuffe auf die Verbindungsstelle aufgeschoben wird. Dabei hat es sich als besonders vorteilhaft erwiesen, wenn die Verbindungsmuffe mindestens eines der zuvor beschriebenen Merkmale aufweist.

Durch das Vorsehen einer erfindungsgemäßen Verbindungsmuffe können Kabel auf einfache Art und Weise miteinander verbunden werden. Die Verbindungsmuffe kann so bereits werksseitig vorbereitet und insbesondere die Steuereinlagen in diese eingebracht werden. So ist es am Einbauort lediglich erforderlich, die Kabelenden in die Verbindungsmuffe einzustecken und diese mechanisch miteinander zu verbinden. Auf diese Weise ergibt sich eine einfache Montage, ohne dass diese besonders fehleranfällig ist. Ferner können insbesondere auch Kabel mit unterschiedlichen Durchmessern und/oder unterschiedlichen elektrischen Eigenschaften miteinander verbunden werden, da sich die Verbindungsmuffe aufgrund des Elastomers an die jeweiligen Kabel anpassen kann.

Bei dem Verfahren können auch die anhand der Verbindungsmuffe und/oder des Kabelsystems und/oder des Herstellungsverfahrens beschriebenen Merkmale und Ausgestaltungen allein und in Kombination verwendet werden. Auch können die anhand der Verfahren und/oder des Kabelsystems beschriebenen Merkmale und Ausgestaltungen bei einer Verbindungsmuffe und/oder einem Kabelsystem allein und in Kombination verwendet werden.

Weitere Einzelheiten und Vorteile der Erfindung sollen nachfolgend anhand der in den Zeichnungen dargestellten Ausführungsbeispiele näher erläutert werden. Hierin zeigt:
- Fig. 1: einen Längsschnitt durch ein erstes Ausführungsbeispiel einer einteiligen Verbindungsmuffe;
- Fig. 2: einen Längsschnitt durch ein zweites Ausführungsbeispiel einer einteiligen Verbindungsmuffe mit Hochspannungselektrode;
- Fig. 3: einen Längsschnitt durch ein drittes Ausführungsbeispiel einer dreiteiligen Verbindungsmuffe;
- Fig. 4: einen Längsschnitt durch ein viertes Ausführungsbeispiel einer dreiteiligen Verbindungsmuffe mit Hochspannungselektrode; und
- Fig. 5: eine schematische Darstellung des Potentialverlaufs.

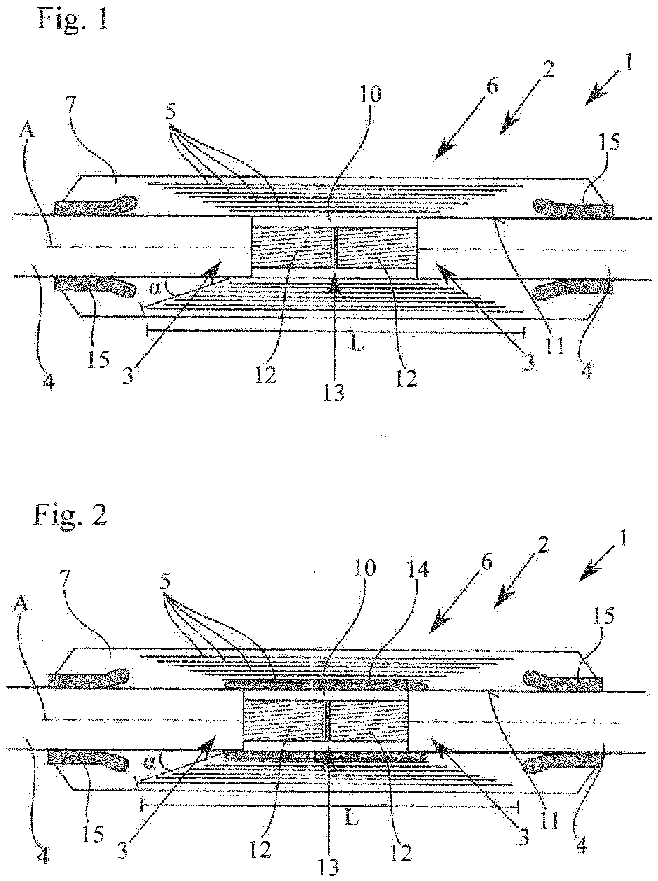

In der Fig. 1 ist ein erstes Ausführungsbeispiel einer erfindungsgemäßen Verbindungsmuffe 2 dargestellt, mittels welcher zwei Kabelenden 3 zweier Hochspannungsgleichspannungskabel 4 miteinander verbunden werden können.

Verbindungsmuffen 2 werden in vielen Bereichen der Energietechnik im Bereich der Hochspannung und der Höchstspannung zur Verbindung von Hochspannungskabeln 4, beispielsweise von Erdkabeln oder dergleichen, verwendet. Mit Hilfe der Verbindungsmuffen 2 können Kabelenden 3 sowohl von Gleichspannungskabeln 4 als auch von Wechselspannungskabeln auf einfache Art und Weise verbunden werden. Die Verbindungsmuffen 2 schützen dabei die Verbindungsstelle 13 der Kabelenden 3 der Kabel 4 vor äußeren Einflüssen, wie beispielsweise Feuchtigkeit, Staub oder dem Eindringen von Fremdkörpern, da die Verbindungsstelle 13 vollständig umschlossen wird.

Bei bekannten Verbindungsmuffen 2 werden die Kabelenden 3 zunächst entsprechend vorbereitet und dann in die Verbindungsmuffe 2 eingeschoben und dort fixiert. Zur Feldsteuerung sind insbesondere im Bereich der Wechselspannung zumeist Hochspannungselektroden 14 vorgesehen, wie Schirm- oder Feldelektroden, deren Herstellung jedoch sehr aufwendig ist. Zudem sind entsprechende Verbindungsmuffen weisen die Verbindungskörper in der Regel einen Gießharzisolator auf, was die Fertigung sowie die Montage erschwert. Insgesamt haben sich diese Verbindungsmuffen 2 zwar durchaus bewährt, jedoch haben sie sich sowohl hinsichtlich des Montageaufwands als auch hinsichtlich ihrer elektrischen Eigenschaften insbesondere bei Gleichspannungsanwendungen als eher nachteilig erwiesen.

Grundsätzlich ergeben sich die Feldverhältnisse bei Wechsel- und Stoßspannungen als kapazitives Verschiebungsfeld, das von den Materialien bestimmt wird. Bei Gleichspannung bildet sich ein oftmals völlig anderes resistives Strömungsfeld aus, für das die Leitfähigkeiten verantwortlich sind. Mischfelder und transiente Belastungen führen dabei zu sehr komplexen Feldverhältnissen, welche bei der Ausgestaltung einer Verbindungsmuffe 2 zu berücksichtigen ist. Insoweit ist es in der Regel nicht möglich, standardmäßige AC-Verbindungsmuffen auch als DC-Verbindungsmuffen 2 zu verwenden. Die Feldverteilungen in Kabelsystemen 1 unterscheiden sich bei Gleichspannung grundsätzlich von den üblicherweise betrachteten dielektrischen Verschiebungsfeldern bei Wechsel- und Stoßspannungsbelastung. Bei sehr lange anstehender Gleichspannung bildet sich ein stationäres Strömungsfeld aus, dessen Feldverteilung nicht mehr von den Dielektrizitätszahlen, sondern von den stationären Leitfähigkeiten der Isoliermaterialien bestimmt wird. Dadurch werden Materialien mit höherer Leitfähigkeit entlastet und hochohmige Materialien mit niedriger Leitfähigkeit sehr stark belastet. Es kommt erschwerend hinzu, dass nach dem Zuschalten, Ändern oder Umpolen einer Gleichspannung Verschiebungsfelder auftreten, die in einem transienten Vorgang dem stationären Strömungsfeld zustreben, wobei schwer überschaubare Feldmigrationen und Belastungsmaxima auftreten können. Ein Gleichspannungskabelsystem 1 muss all diesen Situationen Rechnung tragen.

Ein wichtiger Punkt stellt dabei bei der Verbindung zweier Hochspannungsgleichspannungskabel 4 die Feldsteuerung im Bereich der Verbindungsmuffe 2 dar. Denn die im Hochspannungsgleichspannungskabel 4 auftretende Spannung und insbesondere die im Hochspannungsgleichspannungskabel 4 auftretenden Feldstärken unterscheiden sich deutlich, je nachdem ob eine Verwendung mit Wechselspannung oder Gleichspannung erfolgt. Aufgrund dessen können zwei Wechselspannungskabel auf einfache Weise mit bekannten Muffen verbunden werden, welche etwa über eine Hochspannungselektrode 14 verfügen. Bei Gleichspannungsanwendungen, insbesondere bei Spannungen über 250 kV, ist die Feldstärke jedoch abhängig von transienten und statischen Vorgängen im Hochspannungsgleichspannungskabel 4, welche nicht mit bekannten Muffen gehandhabt werden können.

Durch die erfindungsgemäße Verbindungsmuffe 2 können diese Nachteile behoben werden. Wie dies die Fig. 1 zeigt, weist die Verbindungsmuffe 2 einen Verbindungskörper 6 auf, welcher Steuereinlagen 5 zur Steuerung des elektrischen Feldes aufweist. Auf diese Weise kann eine Verbindungsmuffe 2 angegeben werden, mit welcher die elektrischen Eigenschaften, aber auch die Montage insbesondere bei Gleichspannungsanwendungen vereinfacht werden kann. Hierdurch können Verbindungsmuffen 2 auch bei Gleichspannungsanwendungen, insbesondere im Bereich der Hoch- und Höchstspannung Anwendung finden. Durch einen Verbindungskörper 6 mit Steuereinlagen 5 kann die Potentialverteilung in dem Verbindungskörper 6 vorgegeben werden.

Die Verbindungsmuffe 2 ist im Wesentlichen schichtartig aufgebaut. Darüber hinaus weist die Verbindungsmuffe 2 einen rotationssymmetrischen Aufbau auf. Im Inneren der Verbindungsmuffe 2 ist in der Mitte des Verbindungskörpers 6 eine stromtragfähige Verbindung 10 angeordnet, welche die Leiter 12 der Kabelenden 3 elektrisch miteinander verbindet, so dass eine Strom- und/oder Spannungsübertragung erfolgen kann. Die stromtragfähige Verbindung 10 ist im vorliegenden Ausführungsbeispiel als metallisches Rohr ausgebildet, über welches der Strom durch die Verbindungsmuffe 2 geführt werden kann.

Die stromtragfähige Verbindung 10 ist dabei gemäß dem in der Fig. 1 dargestellten Ausführungsbeispiel feldelektrodenfrei ausgestaltet, d. h. es ist nicht notwendig, aufwendige Hochspannungselektroden 14, wie Schirm- oder Feldelektroden zur Steuerung des elektrischen Feldes vorzusehen. Vielmehr kann es sich um eine einfache elektrische Verbindung, beispielsweise in Form eines Metallrohres, handeln.

Eine alternative Ausgestaltung zeigt Fig. 2. Die in Fig. 2 dargestellte Verbindungsmuffe 2 ist im Wesentlichen identisch mit der in der Fig. 1 dargestellten Verbindungsmuffe 2. Allerdings unterscheidet sich dieses zweite Ausführungsbeispiel vom ersten Ausführungsbeispiel dadurch, dass eine Hochspannungselektrode 14 im Bereich der stromtragfähigen Verbindung 10 vorgesehen ist. Auf diese Weise kann die Feldsteuerung zusätzlich verbessert werden.

In radialer Richtung weiter außen folgen dann auf die stromtragfähige Verbindung 10 mit oder ohne Hochspannungselektrode 14 die Steuereinlagen 5 zur Steuerung des elektrischen Feldes. Durch die Wahl der Steuereinlagen 5 und insbesondere der Wahl deren Materialien und Abstände, kann die Potentialverteilung innerhalb des Verbindungskörpers 6 eingestellt werden.

Die Steuereinlagen 5 sind rotationssymmetrisch ausgestaltet und insbesondere geschichtet und gegeneinander isoliert in dem Verbindungskörper 6 angeordnet. Die einzelnen Schichten der Steuereinlagen 5 erstrecken sich dabei in radialer Richtung, so dass sich im Querschnitt eine ringförmige Anordnung ergibt. Insbesondere sind die Steuereinlagen 5 radial um die Kabelenden 3 herum angeordnet.

Die Steuereinlagen 5 können aus verschiedensten Materialien hergestellt sein und unterschiedliche elektrische Eigenschaften aufweisen. So hat es sich als vorteilhaft erwiesen, wenn verschiedene Steuereinlagen 5 mit leitenden, halbleitenden oder resistiven Eigenschaften verwendet werden. Die Steuereinlagen 5 können beispielsweise Metall und/oder aus einem leitfähigen Kunststoff gefertigt sein und eine Wanddicke von weniger als 500 pm, insbesondere von weniger als 200 pm aufweisen.

Die einzelnen Steuereinlagen 5 sind in radialer Richtung durch Schichten aus einem isolierenden Material voneinander getrennt. Durch die Kombination von Steuereinlagen 5 und isolierenden Schichten kann dann eine gezielte Feldsteuerung erreicht werden. Insbesondere ist es möglich, auf zusätzliche Materialien mit feldsteuernden Eigenschaften, wie nicht-lineare resistive feldsteuernde Materialien zu verzichten. Hierdurch können die Kosten gesenkt und Nachteile, welche aufgrund der Verwendung solcher Materialien bei der Prüfung von Gleichspannungssystemen mit Wechselspannung auftreten könnten, vermieden werden.

Die Länge L der einzelnen Steuereinlagen 5 nimmt nach radial außen zu, wodurch ein Winkel a zwischen der Grenzfläche 11 des Kabelendes 3 und den Steuereinlagen 5 ausgebildet wird. Durch die Wahl der Länge L der Steuereinlagen 5 und/oder des Winkels a können die Feldverteilungseigenschäften zusätzlich eingestellt und an den jeweiligen Anwendungsfall angepasst werden. Als bevorzugt haben sich dabei Längen L im Bereich von 10 cm und 50 cm, jedoch besonders bevorzugt im Bereich von 20 cm und 30 cm erwiesen. Als bevorzugter Winkel a zwischen der Längsachse A der Verbindungsmuffe 2 und der Grenzfläche 11 des Innenkonus haben sich dabei Winkel a von weniger als 60°, bevorzugt von weniger als 45° und besonders bevorzugt von im Wesentlichen 25° erwiesen. Die Steuereinlagen 5 bilden so an deren Ende eine konische Kontur, wodurch zusätzliche positive elektrische Eigenschaften erzielt werden können. Die einzelnen Steuereinlagen 5 ergeben so insgesamt eine konusförmige Form, wobei der Querschnitt des Torus pyramidenförmig oder kegelförmig ausgestaltet ist. Insgesamt kann eine Vielzahl von Steuereinlagen 5 vorgesehen sein. Dabei hat es sich jedoch als bevorzugt erwiesen, wenn mindestens fünf Steuereinlagen 5, bevorzugt mindestens acht Steuereinlagen 5 und besonders bevorzugt mindestens zehn Steuereinlagen 5 vorgesehen sind. Auf diese Weise kann die über die Steuereinlagen 5 und, sofern vorhanden die Hochspannungselektrode 14, die vorgegebene Potentialverteilung über das polymere, insbesondere elastomere Material des Muffenhauptkörpers 7 auf die Grenzschicht 11 zwischen dem Muffenhauptkörper 7 und der Isolierung der Kabel 4 übertragen werden, wodurch auch dort die Feldverteilung vorgegeben und eingestellt werden kann.

Die innerste Steuereinlage 5 der Steuereinlagen 5 liegt auf Hochspannungspotential und die radial am weitesten außen liegende Steuereinlage 5 kann geerdet sein. Aufgrund dessen ist dann das elektrische Feld auf den Bereich zwischen dieser äußersten und der innersten Steuereinlage 5 begrenzt. Auf diese Weise ist mit Hilfe der Steuereinlagen 5 und den isolierenden Schichten bei transienten Vorgängen eine kapazitive Feldsteuerung und/oder bei Gleichspannungsanwendungen eine resistive Feldsteuerung erzeugbar. Bei transienten Vorgängen wirken die Kapazitäten zwischen den einzelnen Steuereinlagen 5 und es ergibt sich eine Feldverteilung gemäß einem kapazitiven Spannungsteiler. Im stationären Gleichspannungsfall hingegen sind die Widerstände und/oder die Leitfähigkeiten vorherrschend, so dass sich in diesem Fall die Steuereinlagen 5 wie ein resistiver Spannungsteiler auswirken. Da die einzelnen Steuereinlagen 5 jeweils ein Potential gemäß der relevanten Spannungsteiler annehmen, kann das elektrische Feld insbesondere über den Abstand der leitfähigen Steuereinlagen 5 eingestellt werden. Dieser Abstand zwischen den Steuereinlagen 5 kann dabei bevorzugt im Bereich von 0,5 mm bis 3 mm, besonders bevorzugt im Bereich von 1 mm bis 2 mm und besonders bevorzugt im Bereich von 1,2 mm bis 1,8 mm liegen.

Die Steuereinlagen 5 sind in den Verbindungskörper 6 eingebettet. Gemäß den ersten beiden Ausführungsbeispielen gemäß Fig. 1 und Fig. 2 ist der Verbindungskörper 6 einteilig mit einem Muffenhauptkörper 7 ausgebildet. Der Verbindungskörper 6 und insbesondere der Muffenhauptkörper 7 weist dabei einen insgesamt zylinderförmigen Aufbau auf. Der Verbindungskörper 6, und insbesondere der Muffenhauptkörper 7, ist aus einem Elastomer, insbesondere einem Silikonelastomer, hergestellt. Auf diese Weise kann die Montage und insbesondere die Montagezeit gegenüber bekannten Lösungen verbessert werden, da die Verbindungsmuffe 2 flexibel auf die Kabelenden 3 der Hochspannungsgleichspannungskabel 4 aufgeschoben werden kann. Als Materialien haben sich dabei beispielsweise polymere Materialien, HTV, RTV- und/oder LSR-Silikone als vorteilhaft erwiesen. Durch das Vorsehen eines solchen Muffenhauptkörpers 7 kann eine hochspannungsfeste Umhüllung des Verbindungsbereichs der Leiterenden 12 bei gleichzeitiger Verbindung zu den Kabelisolierungen erreicht werden.

Zusätzlich weist der Muffenhauptkörper 7 an beiden Enden Feldsteuerelemente 15 auf, welche als leitfähige Elektroden ausgebildet sind. Diese können insbesondere als integrierte Erdelektroden ausgebildet sein und während der transienten Vorgänge wirksam sein. Die Feldsteuerelemente 15 können insbesondere als Feldsteuertrichter, beispielsweise in Form von Elektrodenringen ausgebildet sein.

Der Verbindungskörper 6 ist insgesamt zylinderförmig und von seinem Aufbau her ebenfalls rotationssymmetrisch ausgestaltet. Der Verbindungskörper 6 kann in einem Gehäuse 9 angeordnet sein, welches den Verbindungskörper 6 vollständig umschließt und diesen so vor Umgebungseinflüssen schützt. Des Weiteren kann der Verbindungskörper 6 von weiteren Elementen ummantelt werden, wie beispielsweise Bändern, Schrumpfschläuchen oder dergleichen. Das Gehäuse 9 kann bevorzugt als zweiteiliges Zylinderrohr ausgebildet sein, so dass die beiden Teilelemente des Gehäuses 9 von beiden Seiten des Verbindungskörpers 6 her auf diesen aufgeschoben werden können.

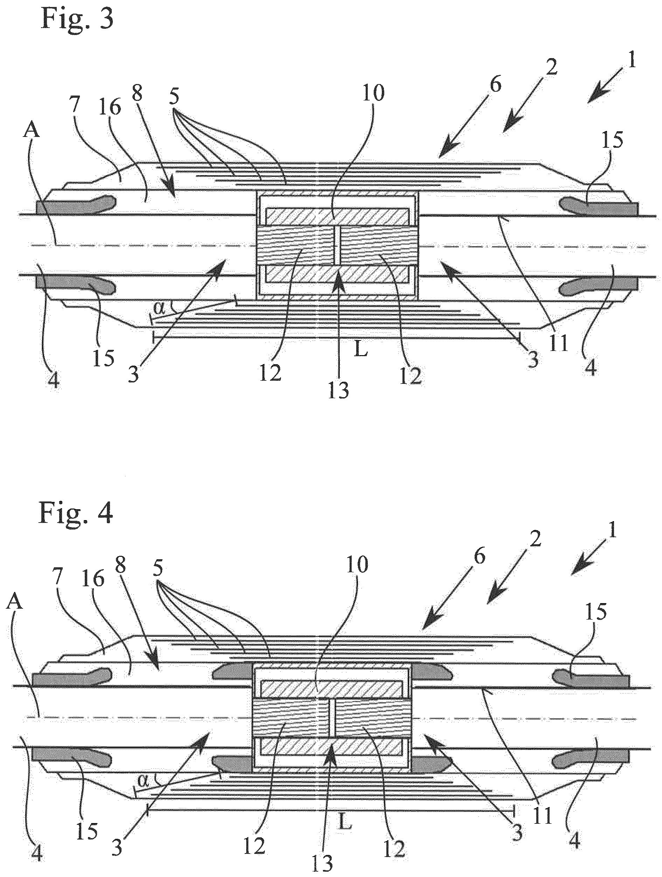

Die Fig. 3 und 4 zeigen weitere Ausführungsbeispiele einer erfindungsgemäßen Verbindungsmuffe 2. Im Gegensatz zu den in den Fig. 1 und 2 dargestellten Verbindungsmuffen 2 ist bei diesen der Verbindungskörper 6 mehrteilig, insbesondere dreiteilig, mit einem Muffenhauptkörper 7 und mindestens einem Adapterelement 8 ausgebildet. Hinsichtlich der sonstigen Eigenschaften sind diese jedoch mit den Verbindungsmuffen 2 gemäß den ersten beiden Ausführungsbeispielen identisch.

Bei den in den Fig.3 und 4 dargestellten Ausführungsbeispielen der Verbindungsmuffen 2 handelt es sich um dreiteilige Verbindungsmuffen 2, bei welchen an beiden Seiten des Verbindungskörpers 6 Adapterelemente 8 vorgesehen sind. Die Adapterelemente 8 können bevorzugt zwischen dem Muffenhauptkörper 7 und den Kabelenden 3 angeordnet werden. In diesem Fall weisen die Adapterelemente 8 die Feldsteuerelemente 15 auf, welche wiederum in einen Isolierkörper 16 eingebettet sind. Bevorzugt können die Adapterelemente 8 und insbesondere der Isolierkörper 16 der Adapterelemente 8 aus dem gleichen Material gefertigt sein, wie der Muffenhauptkörper 7, uns beispielsweise aus einem elastomeren Material, wie Silikon, EPDM oder EPR gefertigt, so dass diese isolierende Eigenschaften aufweisen. Mit Hilfe solcher Adapterelemente 8 kann zusätzlich eine höhere Flexibilität erreicht werden, wodurch sich auch beispielsweise Kabel 4 mit unterschiedlichen Durchmessern und/oder elektrischen und/oder mechanischen Eigenschaften verbinden lassen. Über das Feldsteuerelement 15 kann die elektrische Feldverteilung im Bereich der Grenzflächen 11 zusätzlich beeinflusst werden.

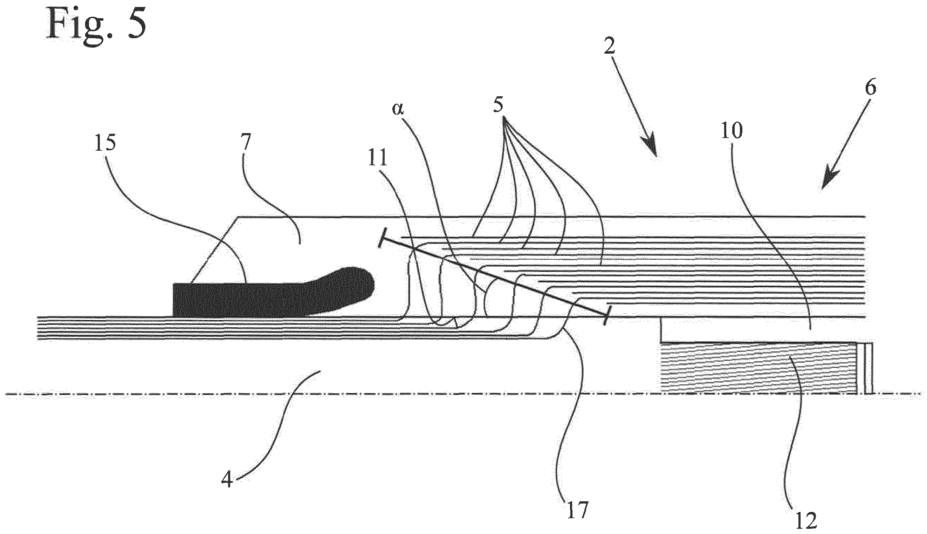

Mittels einer erfindungsgemäßen Verbindungsmuffe 2 lässt sich die Potentialverteilung über die komplette Muffe 2 einstellen und insbesondere die Potentialverteilung über den Muffenhauptkörper 7 und/oder die Adapterelemente 8 auf die Grenzschicht 11 zwischen dem Verbindungskörper 6 und dem Kabel 4 ein prägen. Einen solchen Verlauf der Potentialverteilung an den Grenzflächen 11 zeigt in beispielhafter Weise Fig. 5.

Wie dies dort zu erkennen ist, wird das elektrische Feld über die Steuereinlagen 5 der Verbindungsmuffe 2 innerhalb des Verbindungskörpers 6 geführt. An der Grenzfläche 11 tritt das elektrische Feld dann in die Kabelisolierung des Kabels 4 ein. Insoweit wird die Potentialverteilung über die Enden der Steuereinlagen 5 an den Innenkonen auf das Kabel 4 übertragen und dort eingeprägt. Durch die konische Ausgestaltung der Steuereinlagen 5 in der Nähe der Grenzfläche 11 kann die Feldverteilung im Bereich des Übergangs zwischen zwei Feststoffen eingestellt und kontrolliert werden. Insoweit kann eine Kontrolle der Feldstärke im Inneren der Muffe 2 erfolgen. Dabei ist die Potentialverteilung abhängig von dem Abstand der leitfähigen Steuereinlagen 5. Während der transienten Vorgänge wirken zudem die Erdelektroden 15 in dem Muffenhauptkörper 7 und/oder den Adapterelementen 8. Durch die Einprägung der Potentialverteilung über die leitfähigen Steuereinlagen 4 innerhalb eines Verbindungskörpers 6 ist es daher möglich, die unterschiedlichen Materialparameter der Kabelisolierung zu verdrängen.

Die Verbindungsmuffe 2 stellt einen Teil eines Kabelsystems 1 dar, insbesondere eines Kabelsystems 1 für Hochspannungsgleichspannungsanwendungen, mit zwei Kabeln 4 und einer Verbindungsmuffe 2. Mit solch einem Kabelsystem 1 und insbesondere einer solchen Verbindungsmuffe 2 können Kabelenden 3 mit unterschiedlichen elektrischen Eigenschaften und/oder unterschiedliche Durchmessern verbunden werden. Dies ist bei normalen Muffen aufgrund unterschiedlicher Materialparameter nicht möglich. Mit der erfindungsgemäßen Verbindungsmuffe 2 ist dies jedoch aufgrund der Einprägung der Potentialverteilung über die leitfähigen Steuereinlagen 5 innerhalb des Verbindungskörpers 6 möglich. Denn in diesem Fall sind die unterschiedlichen Materialparameter weniger ausschlaggebend. Vielmehr ist die Einprägung der Potentialverteilung dominierend.

Die Verbindungsmuffe 2 ist bevorzugt als Aufschiebemuffe ausgebildet, so dass diese nach einem Verbindungsvorgang über die Verbindungsstelle 13 der Leiter 12 geschoben werden kann. Bei einem Verfahren zum Verbinden von zwei Kabelenden 3 von zwei Gleichspannungskabeln 4 können zunächst die Kabelenden 3, insbesondere die Kabelisolierungen, abgemantelt und die Kabelenden 3 miteinander verbunden werden und anschließend die Verbindungsmuffe 2 auf die Verbindungsstelle 13 aufgeschoben werden. Derart können Kabel 4 auf einfache Art und Weise miteinander verbunden werden. Die Verbindungsmuffe 2 kann so bereits werksseitig vorbereitet und insbesondere die Steuereinlagen 5 in diese eingebettet werden. So ist es am Einbauort lediglich erforderlich, die Kabelenden 3 in die Verbindungsmuffe 2 einzustecken und diese mechanisch miteinander zu verbinden. Auf diese Weise ergibt sich eine einfache Montage, ohne dass diese besonders fehleranfällig ist. Ferner können insbesondere auch Kabel 4 mit unterschiedlichen Durchmessern und/oder unterschiedlichen elektrischen Eigenschaften miteinander verbunden werden, da sich die Verbindungsmuffe 2 aufgrund des Elastomers an die jeweiligen Kabel 4 anpassen kann.

Zur Herstellung einer Verbindungsmuffe 2 werden das Elastomer des Verbindungskörpers 6 und die Steuereinlagen 5 abwechselnd mittels eines 3D-Druckers aufgetragen und so eine dreidimensionale Verbindungsmuffe 2 erzeugt wird. Dabei können die Steuereinlagen 5 mittels des Druckverfahrens abwechseln mit dem Elastomer einbringbar sein. Entsprechend hergestellte Verbindungsmuffen 2 weisen zum einen eine hohe Flexibilität und zum anderen eine gute Potentialverteilung auf. Mit Hilfe eines 3D-Druckverfahrens kann das Material Schicht für Schicht aufgetragen und so dreidimensionale Gegenstände, insbesondere eine Verbindungsmuffe 2, erzeugt werden. Dabei kann der schichtweise Aufbau bevorzugt computergesteuert aus einem oder mehreren flüssigen oder festen Werkstoffen nach vorgegebenen Maßen und Formen erfolgen. Vorteilhafterweise können beim Aufbau physikalische oder chemische Härtungs- oder Schmelzprozesse stattfinden.

Als besonders vorteilhaft hat es sich erwiesen, wenn mindestens zwei verschiedene Materialien verwendet werden. Bevorzugt kann zur Herstellung ein 3D-Drucker verwendet werden, welcher eine Vielzahl unterschiedlicher Materialien während eines Druckprozesses verwenden kann. Insbesondere haben sich Multi-Material 3D-Druckverfahren als vorteilhaft erwiesen. Auf diese Weise können unterschiedliche Materialien, mit unterschiedlichen elektrischen und/oder mechanischen Eigenschaften eingesetzt werden. Derart lassen sich die Steuereinlagen 5 definiert in die Verbindungsmuffe 2, insbesondere in einem vorgegebenen Abstand einbringen.

Der Anwendungsbereich der erfindungsgemäßen Verbindungsmuffe 2 sowie des Kabelsystems 1 liegt vorteilhaft bei Spannungen höher als 150 kV. Besonders bevorzugt sind jedoch Anwendungsbereiche von mehr als 300 kV, insbesondere von mehr als 500 kV. Es sind jedoch auch Anwendungen im Bereich der Mittelspannung möglich. Die erfindungsgemäße Verbindungsmuffe 2 eignet sich dabei insbesondere für Hochspannungsgleichspannungsanwendungen. Eine Anpassung an höhere Spannungen lässt sich dabei insbesondere durch die Anpassungen der Maße des Verbindungskörpers 6 sowie der Steuereinlagen 5 erreichen. Zudem eignet sich die Verbindungsmuffe 2 auch für den Einsatz im Bereich der Erdkabel, wo andere Anforderungen gelten, als dies beispielsweise bei Durchführungen oder Kabelendverschlüssen der Fall ist.

Mit Hilfe einer erfindungsgemäßen Verbindungsmuffe 2 mit einem Verbindungskörper 6, welcher Steuereinlagen 5 sowie einen Muffenhauptkörper 7 aus einem Elastomer aufweist, können auch Kabel 4 unterschiedlicher Durchmesser und/oder elektrischer und/oder mechanischer Eigenschaften miteinander verbunden werden. Durch einen elastomeren Verbindungskörper, insbesondere aus einem Silikonelastomer, lässt sich die Potentialverteilung an der Grenzfläche zum Kabel 4 auf einfache Weise einprägen. Es ergibt sich eine einfache Montage sowie verbesserte elektrische Eigenschaften durch die Ausgestaltung der Steuereinlagen 5.

### Bezugszeichen:

- 1: Kabelsystem
- 2: Verbindungsmuffe
- 3: Kabelende
- 4: Hochspannungsgleichspannungskabel
- 5: Steuereinlage
- 6: Verbindungskörper
- 7: Muffenhauptkörper
- 8: Adapterelement
- 9: Gehäuse
- 10: Stromtragfähige Verbindung
- 11: Grenzfläche
- 12: Leiter
- 13: Verbindungsstelle
- 14: Hochspannungselektrode
- 15: Feldsteuerelement
- 16: Isolierkörper
- 17: Potentiallinie

- L: Länge
- A: Längsachse
- α: Winkel

## Patentansprüche

1. Verbindungsmuffe zur Verbindung von Kabelenden (3) von Hochspannungsgleichspannungskabeln (4) mit einem Verbindungskörper (6), der Steuereinlagen (5) zur Steuerung des elektrischen Feldes aufweist, wobei
der Verbindungskörper (6) aus einem Elastomer, insbesondere aus einem Silikonelastomer, hergestellt ist, wobei die Steuereinlagen (5) geschichtet und gegeneinander isoliert angeordnet sind, wobei die Steuereinlagen (5) elektrisch leitend sind und insbesondere Metall und/oder insbesondere leitfähigen Kunststoff aufweisen, und wobei
die Steuereinlagen (5) derart ausgestaltet sind, dass bei transienten Vorgängen eine kapazitive Feldsteuerung erzeugbar ist, wobei bei transienten Vorgängen die Kapazitäten zwischen den einzelnen Steuereinlagen (5) wirksam sind, sodass sich eine Feldverteilung gemäß einem kapazitiven Spannungsteiler ergibt; und wobei die Länge der einzelnen Steuereinlagen (5) nach radial außen zunimmt.

2. Verbindungsmuffe nach Anspruch 1, **dadurch gekennzeichnet, dass** die Steuereinlagen (5) mittels eines Druckverfahrens abwechselnd mit dem Elastomer eingebracht sind.

3. Verbindungsmuffe nach einem der vorhergehenden Ansprüche, **dadurch gekennzeichnet, dass** mindestens eine Steuereinlage (5), insbesondere in radialer Richtung innen liegende Steuereinlage (5), auf Hochspannungspotential liegt und/oder mindestens eine Steuereinlage (5), insbesondere in radialer Richtung außen liegende Steuereinlage (5), geerdet ist.

4. Verbindungsmuffe nach einem der vorhergehenden Ansprüche, **dadurch gekennzeichnet, dass** die Steuereinlagen (5) derart ausgestaltet sind, dass bei stationären Vorgängen eine resistive Feldsteuerung erzeugbar ist.

5. Verbindungsmuffe nach einem der vorhergehenden Ansprüche, **dadurch gekennzeichnet, dass** die Steuereinlagen (5) radial um die Kabelenden (3) herum angeordnet sind.

6. Verbindungsmuffe nach einem der vorhergehenden Ansprüche, **dadurch gekennzeichnet, dass** mittels der Steuereinlagen (5), insbesondere über den Abstand der Steuereinlagen (5) zueinander, das elektrische Feld an den Grenzflächen (11) des Verbindungskörpers (6) einstellbar ist.

7. Verbindungsmuffe nach einem der vorhergehenden Ansprüche, **dadurch gekennzeichnet, dass** der Verbindungskörper (6) einteilig ausgebildet ist.

8. Verbindungsmuffe nach einem der Ansprüche 1 bis 6, **dadurch gekennzeichnet, dass** der Verbindungskörper (6) mehrteilig, insbesondere dreiteilig, mit einem Muffenhauptkörper (7) und mindestens einem Adapterelement (8) ausgebildet ist.

9. Verbindungsmuffe nach einem der vorhergehenden Ansprüche, **dadurch gekennzeichnet, dass** der Verbindungskörper (6) eine stromtragfähige Verbindung (10), insbesondere eine feldelektrodenfreie Verbindung, zur elektrischen Verbindung der Leiter (12) der Kabelenden (3) aufweist.

10. Verbindungsmuffe nach einem der vorhergehenden Ansprüche, **dadurch gekennzeichnet, dass** die Verbindungsmuffe (2) als Aufschiebemuffe ausgebildet ist.

11. Kabelsystem, insbesondere für
Hochspannungsgleichspannungsanwendungen, **gekennzeichnet durch** zwei Kabel (4) und eine Verbindungsmuffe (2) nach einem der Ansprüche 1 bis 10, wobei die Kabel (4) unterschiedliche Durchmesser und/oder elektrische Eigenschaften aufweisen.

12. Verfahren zur Herstellung einer Verbindungsmuffe nach einem der Ansprüche 1 bis 10, **dadurch gekennzeichnet, dass** das Elastomer des Verbindungskörpers (6) und die Steuereinlagen (5) abwechselnd mittels eines 3D-Druckers aufgetragen und so eine dreidimensionale Verbindungsmuffe (2) erzeugt wird.

13. Verfahren nach Anspruch 12, **dadurch gekennzeichnet, dass** mindestens zwei verschiedene Materialien verwendet werden.

14. Verfahren zum Verbinden von zwei Kabelenden (3) von zwei Gleichspannungskabeln (4) mit einer Verbindungsmuffe (2) nach einem der Ansprüche 1 bis 10, bei welchem die Kabelenden (3), insbesondere die Kabelisolierungen, abgemantelt werden und die Kabelenden (3) miteinander verbunden werden und die Verbindungsmuffe (2) auf die Verbindungsstelle (13) aufgeschoben wird.

## Claims

1. Connecting sleeve for connecting cable ends (3) of high-voltage DC cables (4) with a connecting body (6) which has control inserts (5) for controlling the electric field,
wherein
the connecting body (6) is made of an elastomer, in particular a silicone elastomer, wherein the control inserts (5) are arranged in layers and insulated from each other, wherein the control inserts (5) are electrically conductive and in particular comprise metal and/or in particular conductive plastic, and wherein
the control inserts (5) are configured such that capacitive field control can be generated during transient events, wherein, during transient events, the capacitances between the individual control inserts (5) are effective, so that a field distribution according to a capacitive voltage divider results; and wherein the length of the individual control inserts (5) increases radially outward.

2. Connecting sleeve according to claim 1, **characterized in that** the control inserts (5) are introduced alternately with the elastomer by means of a pressing process.

3. Connecting sleeve according to one of the preceding claims, **characterized in that** at least one control insert (5), in particular a control insert (5) located radially inside, is at high voltage potential and/or at least one control insert (5), in particular a control insert (5) located radially outside, is grounded.

4. Connecting sleeve according to one of the preceding claims, **characterized in that** the control inserts (5) are configured in such a way that a resistive field control can be generated during steady-state operations.

5. Connecting sleeve according to one of the preceding claims, **characterized in that** the control inserts (5) are arranged radially around the cable ends (3).

6. Connecting sleeve according to one of the preceding claims, **characterized in that**, by means of the control inserts (5), in particular via the distance between the control inserts (5), the electric field at the boundary surfaces (11) of the connecting body (6) can be adjusted.

7. Connecting sleeve according to one of the preceding claims, **characterized in that** the connecting body (6) is configured as a single piece.

8. Connecting sleeve according to one of claims 1 to 6, **characterized in that** the connecting body (6) is configured in multiple parts, in particular in three parts, with a sleeve main body (7) and at least one adapter element (8).

9. Connecting sleeve according to one of the preceding claims, **characterized in that** the connecting body (6) has a current-carrying connection (10), in particular a field electrode-free connection, for electrically connecting the conductors (12) of the cable ends (3).

10. Connecting sleeve according to one of the preceding claims, **characterized in that** the connecting sleeve (2) is configured as a slip-on sleeve.

11. Cable system, in particular for high-voltage DC applications, **characterized by** two cables (4) and a connecting sleeve (2) according to one of claims 1 to 10, wherein the cables (4) have different diameters and/or electrical properties.

12. Method for manufacturing a connecting sleeve according to one of claims 1 to 10, **characterized in that** the elastomer of the connecting body (6) and the control inserts (5) are applied alternately by means of a 3D printer, thus producing a three-dimensional connecting sleeve (2).

13. Method according to claim 12, **characterized in that** at least two different materials are used.

14. Method for connecting two cable ends (3) of two DC cables (4) with a connecting sleeve (2) according to one of claims 1 to 10, in which the cable ends (3), in particular the cable insulation, are stripped and the cable ends (3) are connected to each other and the connecting sleeve (2) is pushed onto the connection point (13).

## Revendications

1. Boîte de raccordement pour le raccordement d'extrémités de câbles (3) de câbles de tension continue à haute tension (4) comportant un corps de raccordement (6) qui présente des couches intermédiaires de commande (5) pour la commande du champ électrique, dans laquelle
le corps de raccordement (6) est fabriqué en un élastomère, en particulier en un élastomère de silicone, dans laquelle les couches intermédiaires de commande (5) sont disposées en couches et de manière à être isolées les unes des autres, dans laquelle les couches intermédiaires de commande (5) sont électriquement conductrices et présentent en particulier du métal et/ou en particulier une matière plastique conductrice, et dans laquelle
les couches intermédiaires de commande (5) sont configurées de telle sorte qu'une commande de champ capacitive peut être générée lors de processus transitoires, dans laquelle les capacités entre les différentes couches intermédiaires de commande (5) sont actives lors de processus transitoires de sorte qu'une répartition de champ en résulte selon un diviseur de tension capacitif ; et dans laquelle la longueur des différentes couches intermédiaires de commande (5) va en augmentant radialement vers l'extérieur.

2. Boîte de raccordement selon la revendication 1, **caractérisée en ce que** les couches intermédiaires de commande (5) sont introduites en alternance avec l'élastomère au moyen d'un procédé sous-pression.

3. Boîte de raccordement selon l'une des revendications précédentes, **caractérisée en ce qu'**au moins une couche intermédiaire de commande (5), en particulier une couche intermédiaire de commande (5) située à l'intérieur dans la direction radiale, est à un potentiel de haute tension et/ou au moins une couche intermédiaire de commande (5), en particulier une couche intermédiaire de commande (5) située à l'extérieur dans la direction radiale, est mise à la terre.

4. Boîte de raccordement selon l'une des revendications précédentes, **caractérisée en ce que** les couches intermédiaires de commande (5) sont configurées de telle sorte qu'une commande de champ résistive peut être générée lors de processus stationnaires.

5. Boîte de raccordement selon l'une des revendications précédentes, **caractérisée en ce que** les couches intermédiaires de commande (5) sont disposées radialement autour des extrémités de câbles (3).

6. Boîte de raccordement selon l'une des revendications précédentes, **caractérisée en ce que** le champ électrique au niveau des surfaces limites (11) du corps de raccordement (6) peut être réglé au moyen des couches intermédiaires de commande (5), en particulier par l'intermédiaire de la distance entre les couches intermédiaires de commande (5).

7. Boîte de raccordement selon l'une des revendications précédentes, **caractérisée en ce que** le corps de raccordement (6) est réalisé en une seule pièce.

8. Boîte de raccordement selon l'une des revendications 1 à 6,
**caractérisée en ce que** le corps de raccordement (6) est réalisé en plusieurs parties, en particulier en trois parties, avec un corps principal de boîte (7) et au moins un élément adaptateur (8).

9. Boîte de raccordement selon l'une des revendications précédentes, **caractérisée en ce que** le corps de raccordement (6) présente un raccordement (10) capable de porter du courant, en particulier un raccordement sans électrode de champ, pour le raccordement électrique des conducteurs (12) des extrémités de câbles (3).

10. Boîte de raccordement selon l'une des revendications précédentes, **caractérisée en ce que** la boîte de raccordement (2) est réalisée sous forme de boîte à enfiler.

11. Système à câbles, en particulier pour des applications à tension continue à haute tension, **caractérisé par** deux câbles (4) et une boîte de raccordement (2) selon l'une des revendications 1 à 10, dans lequel les câbles (4) présentent des diamètres différents et/ou des propriétés électriques différentes.

12. Procédé de fabrication d'une boîte de raccordement selon l'une des revendications 1 à 10, **caractérisé en ce que** l'élastomère du corps de raccordement (6) et les couches intermédiaires de commande (5) sont étalées en alternance au moyen d'une imprimante 3D et une boîte de raccordement (2) tridimensionnelle est ainsi générée.

13. Procédé selon la revendication 12, **caractérisé en ce qu'**au moins deux matériaux différents sont utilisés.

14. Procédé pour le raccordement de deux extrémités de câbles (3) de deux câbles à tension continue (4) avec une boîte de raccordement (2) selon l'une des revendications 1 à 10, dans lequel les extrémités de câbles (3), en particulier les isolations de câble, sont dénudées et les extrémités de câbles (3) sont raccordées entre elles et la boîte de raccordement (2) est enfilée sur le point de raccordement (13).
